# EUROPEAN PATENT SPECIFICATION

(11) **EP 0 914 762 B1**
(45) Date of publication and mention of the grant of the patent: **07.05.2003**
(21) Application number: 98308600.0
(22) Date of filing: 21.10.1998
(51) Int. Cl.: A01C 5/06, A01C 7/08

(54) **Spreader for use with sowing implements**
Führungsplatte für Sägeräte
Déflecteur utilisé dans des semoirs

(30) Priority: 05.11.1997 US 964211
(43) Date of publication of application: 12.05.1999
(73) Proprietor: FLEXI-COIL LIMITED, Saskatoon Saskatchewan S7K 3S5 (CA)
(72) Inventor: Swab, Gerry S., Rosthern, Saskatchewan, S0K 3R0 (CA); Henry, James W., Saskatoon, Saskatchewan, S7K 6E2 (CA); Wood, Murray H., Saskatoon, Saskatchewan, S7H 5B1 (CA)
(74) Representative: Messulam, Alec Moses

(56) References cited:
- DE-C- 288 042
- DE-U- 9 101 998
- FR-A- 331 172
- FR-A- 1 107 417
- US-A- 4 446 801
- US-A- 5 678 500

## Description

### Field of the invention

This invention relates to a spreader for use with sowing implements particularly for providing an evenly spread delivery of seed and other products over an adjustable furrow width.

### Background of the invention

A spreader is a scattering attachment used with planting tools such as air drills which distribute seed, fertiliser or other granular material in airflow conduits across the width of the planting tool. The spreader is associated with a delivery tube, positioned either at the outlet or just inside or outside the outlet. Its purpose is to deflect and redirect seed into a broader area than the row which would be produced by the delivery tube alone. The greater the spread and uniformity of seed placement within the planting furrow, the better the seed bed utilisation achieved.

Seed delivery spreaders currently in use generally comprise an obstruction in or near the outlet of a seed delivery tube which divides the delivery stream into two separated streams. The spreader may be a block with angled faces, or simply a bolt protruding into the seed stream.

An example of a common type of spreader is a Standard spreader produced by Concord which includes a casting having two angled upper surfaces which meet at a central line positioned in the product stream inside the delivery tube. The casting is bolted to the front interior surface of the delivery tube, generally above the product stream. The common feature to this and equivalent designs is an obstruction essentially perpendicular or at a high angle to the travel of the product stream against which the seeds and other products collide at significant velocity. The seeds tend to separate into two separate streams about the obstruction, and are placed in the furrow essentially in two separate rows. Further, the force of the collision with the spreader causes fracturing and splitting of an undesirably large percentage of the seed.

Depending on soil conditions and other parameters, different ground opening tools will be used which create furrows of different widths. A spreader produced by FarmLand includes replaceable castings of different widths to place in the delivery tube on the front interior surface. Different casting shapes determine the amount of separation resulting between the seeded rows. The casting has angled faces acting on the product stream which divide the seeds into two separate streams. The planting pattern is not scattered but is still divided to form separate rows. Growth patterns using this system exhibit this uneven seeding pattern. While this design achieves variation in the delivery pattern, a different tool must be obtained and installed each time a different spread width is desired to make the change. Further, the seeds still must collide with a nearly perpendicular obstruction surface and will suffer damage.

A Flexi-Coil design provides a spreader formed integrally on the rear interior surface of the delivery tube adjacent the outlet. The deflector has a rounded convex shape and does not present the perpendicular surface to the seed stream. However, this design is only suitable for producing a narrow seed scatter pattern since it is within the delivery tube, and the product spread is not as even as desired.

A design from JR Welding discloses the use of a rectangular extension surface extending from the rear interior surface of the delivery tube behind the product stream. The spreader is crimped to conform to the outlet and to have a high central ridge from which the surfaces are angled laterally. The spreader is welded onto the outlet at a small angle to the product stream compared to other prior art devices. The gentle angle of this spreader to the product stream does cause less shock damage to the seed than other spreaders, but the high central ridge tends to divide the seed stream quite distinctly into two rows which are seeded heavily with very little product deposited towards the central region of the furrow. The outlet is also shielded by a seed boot positioned close to the spreader. Forward deflection of seed is limited as a result. This planting pattern is not desired. No adjustment to the spreader position is possible.

The formation rows of seed or fertiliser reduces the amount of product which can be applied. Seed does not benefit from over crowding, and fertiliser and other products may accumulate in unwanted concentrations which may cause damage.

Rather than planting in two separate rows, a more even scatter pattern is desired for fuller utilisation of the soil. It is desired to provide a spreader which provides even scattering of seed delivery without forming distinct rows. If even application of seed and fertiliser can be assured, greater quantities of product can be applied to obtain more efficient soil usage without crowding or burning seed. It is also desired to be able to vary the width of the seed applied to match the furrow. Factors such as air flow, and ground conditions vary the effect of the spread width caused by spreaders. An adjustable spreader would allow seeding to be adapted to the specific conditions to match the spread to the furrow. It is further desired to achieve this delivery without causing shock and seed damage.

French patent FR331 172 A describes a spreader associable with a delivery tube having an outlet through which a stream of product is discharged, the spreader comprising a deflecting surface, means for securing the deflecting surface adjacent the outlet of the delivery tube and adjustment means for selectively adjusting the position of the deflecting surface relative to the product.

### Summary of the Invention

Accordingly, the present invention provides a spreader for mounting on a delivery tube having an outlet through which a stream of product is discharged, said spreader comprising:
a deflecting surface;
mounting means for mounting the deflecting surface adjacent the outlet of the delivery tube; and
adjustment means for selectively adjusting the position of the deflecting surface relative to the product stream,
characterised in that the deflecting surface is positioned in the product stream free of any lateral product constraining structure.

In a preferred embodiment of the present invention, the adjustment means provides angular adjustment within a range from parallel to the product stream to a substantially horizontal position.

In a further preferred embodiment of the present invention the deflecting surface of the spreader has a tapered shape narrowest at the forwardmost tip of the leading edge.

A still further preferred embodiment includes deflecting surface having lateral portions angled laterally downward from a higher centreline.

It is an advantage of the present invention that the pattern of product deposit is adjustable to varying widths by adjusting the position of the spreader without changing to a different tool.

It is a further advantage of the present invention that even distribution of product can be achieved over a range of furrow widths.

It is an advantage both to manufacturer and farmer to provide a spreader which replaces several equivalent tools with a single adjustable one reducing manufacture and stocking costs on the production side, and capital costs and changeover time on the consumer side.

### Brief description of the drawings

The invention will now be described further, by way of example, with reference to the accompanying drawings, in which:

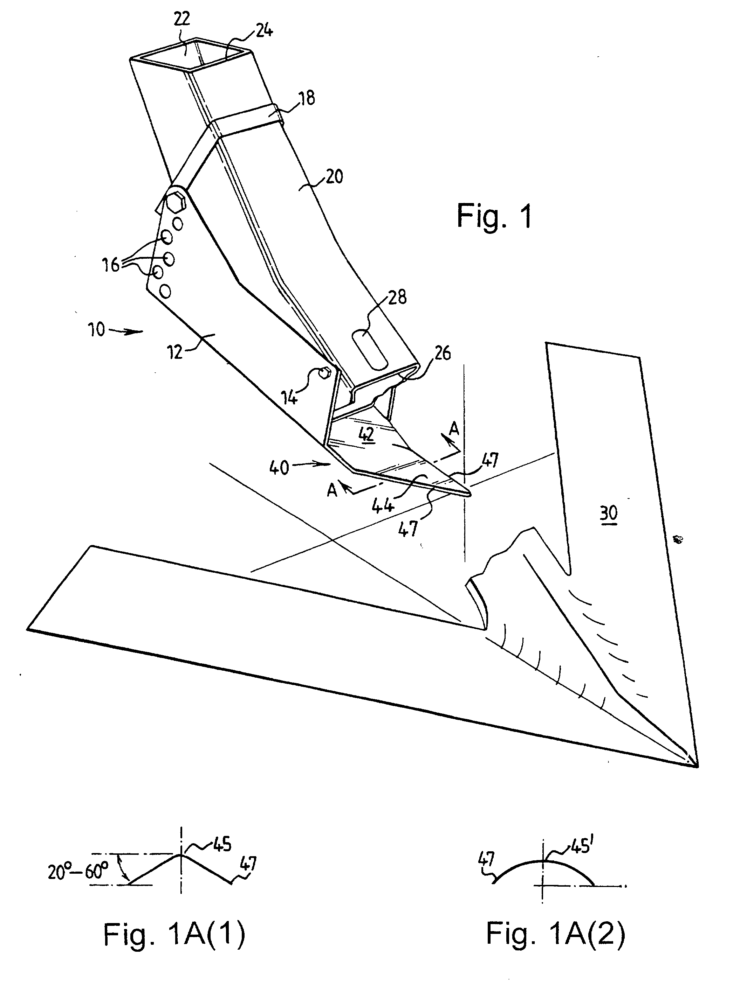

Figure 1 is an isometric view of a preferred embodiment of the spreader mounted on a delivery tube, with a portion of the sweep cut away for illustration;
Figure 1A (1) shows a section along the line A-A illustrating the profile of the spreader tip of Figure 1;
Figure 1A (2) shows an alternate profile for the spreader tip of Figure 1;
Figure 2 shows the embodiment of Figure 1 with the spreader positioned at a minimal angle position;
Figure 2A is a side view of the configuration of Figure 2;
Figure 3 shows the embodiment of Figure 1 with the spreader positioned at its maximum angle position; and
Figure 3A is a side view of the configuration of Figure 3.

Throughout the drawings, like numerals are used to indicate like elements.

### Detailed description of the drawings

A spreader according to the present invention is shown generally at 10 in Figure 1. The spreader 10 is mounted to a delivery tube 20 of a seed delivery tool (not shown). A delivery tube 20 is a fixture, which receives the flexible seed delivery conduit of the seed delivery tool at an upper end, and discharges seed or other product, from an outlet 26 at a ground engaging end. At the outlet 26, movement the product is no longer constrained in a lateral direction. The tube 20 is curved to mount to a shank which carries the ground opening tool at a standard mounting angle, and in operational position, has a rear interior surface 22 and a front interior surface 24. Seed travelling through the tube tends to travel against the rear interior surface 22 of the tube 20 as a result of this angle. The angle at which the product stream is discharged from the outlet 26 may vary widely depending on the planting tool used. The product stream as depicted in the present embodiment has an angle of 65° to the horizontal. Other tools may discharge the product stream at as low an angle as 20° to the horizontal. Adjacent the outlet 26 is a mounting hole 28 for securing the delivery tube 20 to the shank and sweep 30 (shown cut away from the outlet area for clarity) in front of the delivery outlet 26. The illustrated sweep 30 is shown by way of example only, various ground opening tools as available in the art may be used. The advantages of even product spread, however, are most effective with tools which create an effectively flat bottom furrow. Fertiliser may be delivered with the seed, and scattered likewise, thus simplifying the equipment requirements for planting.

The spreader 10 includes a channel 12 for stable connection to the delivery tube 20. The channel 12 is pivotally mounted adjacent the outlet 26 of the delivery tube 20 on pins 14. Adjustment of the angle and position is selected by securing holes 16 and strap 18 secured by bolts to the holes 16 and around the tube 20. In this arrangement adjustment can be made without tools using a cotter pin to secure the bolt through holes 16. A sliding slot could replace the holes 16 for finer angular control. An alternative location for the pivot or a sliding adjustment may also be used. Other adjustment means such as a ratcheted snap fit, threaded rod, or other adjustment fittings as known in the art can be used to adjust the angle and position of the deflecting surface 40 on the spreader 10 adjacent the outlet 26. Adjusting the angle and position of the spreader 10 relative to the direction of the discharging product stream controls the amount of deflection by controlling the angle at which the product strikes the deflecting surface 40, and how broad a section of the surface 40 is placed in the product stream, and consequently the width of the product broadcast. The angle to the product stream in the present invention may be as much as 65°, a preferred range is 15° to 30°. A pattern of seeding ranging from no deflection effect up to approximately 25 cm (10 inches) wide has been observed.

The deflecting surface 40 is located below the product stream, in preferred embodiments, oriented at a small angle, as compared to prior art devices, to the product stream to minimise seed damage. The deflecting surface 40 has a leading edge 47 forwardly facing to the direction of travel. This has the advantage of placing seed and other product in the furrow closely following the sweep 30, before the soil begins to fall back into the furrow. A later seed deposit would result in uneven seeding depth, as product may be placed between the bottom of the furrow and the top surface depending on the time delay, ground conditions, and other factors.

The deflection angle is selected to deflect the product forwardly and laterally. The deflecting surface 40 may be adjusted from essentially parallel to the product stream to a substantially horizontal position. Beyond a horizontal position the seed and other material starts to become divided into separate streams, and less material is deflected forwardly. The range of deflection angles is thus dependent on the initial angle of the product stream as the deflecting surface 40 is not raised to an angle beyond a horizontal position. Consequently, a product stream travelling at a lower angle will be compatible with a more limited range of deflection angles. An angle significantly beyond about 65° is expected to cause unacceptable seed damage as seen in prior art devices.

Deflecting surface 40 preferably includes a separation portion 42 for separating a spreading surface 44 from the outlet 26. Deflecting angles relative to the product stream referred to are measured from the spreading surface 44. The separating portion 42 is generally not contacted by the discharging product, except at higher angles of deflection, as it lies in a path nearly parallel to the product stream. It is desired to separate the spreading surface 44 from the outlet 26 in the direction of the product stream enough to permit product deflected by the surface 44 to be deflected laterally without being confined by the walls of the delivery tube 20 for maximum spread. The outlet 26 itself may be configured to form a separating portion 42, with a shape so that the side walls cease to constrain the product before the spreading surface 44 provides a substantially transverse component to the velocity of the product. In this open area the pressure of the air stream is reduced and accordingly the velocity of the product is also reduced producing a more controlled material placement. Unlike prior art spreaders, it is desired to maintain the outlet 26 as open and unobstructed as possible. Interfering objects which can degrade the spreader 10 performance are minimised.

Preferably the rear portion of the spreading surface 44 is approximately the width of the delivery tube 20 to catch nearly all of the discharged product. The spreading surface 44 has a tapered shape, preferably to a fine tip at the forwardmost position on the leading edge 47. In a preferred tapered shape the leading edges 47 meet at the tip at approximately 36°, and may be between approximately 25° and 45°. A curved shape rather than triangular as depicted may be equally effective. The spreading surface 44 joins the rear portion 42 at an angle disposing the spreading tip 44 into the discharging product stream at the preferred minimum angle. The separation portion 42 when the spreader 10 is at higher angles is positioned to be a surface for gently redirecting the product stream before it reaches the deflecting angle of the spreading surface 44.

The position of the deflecting surface 40 at a given deflecting angle can also be advanced into or withdrawn from the product stream to adjust the width of deflection, particularly with a tapered spreading surface 44 without further adjustment of the deflection angle. If the product stream strikes the narrow tip portion of the spreading surface 44 only a small percentage of the product stream will be deflected while the remaining product passes without deflection. If the deflecting surface 40 is advanced farther into the product stream, product will strike a broader area of the deflecting surface 44 and more of the product stream will be deflected. It is preferred that the widest portion of the deflecting surface 44 be at least as wide as the delivery tube 20, in order to deflect substantially all of the product stream. A sliding mechanism to selectively advance the deflecting surface at a fixed angle into the product stream would also be an appropriate adjustment means.

The deflecting surface 40 can be mounted at a fixed angle to the product stream selected to match the width of the furrow opener used, or selected for maximum scatter pattern. A fixed angle spreader may be formed with or attached directly to the delivery tube. The adjustable mounting may be used to change the width of furrow seeded, or to adjust the seeding pattern as a fine tuning to match furrow widths for specific conditions.

Preferably, the spreading tip 44 of the deflecting surface 40 has a generally convex profile as seen in Figures 1A (1) and 1A (2). The surface is angled laterally from a central line 45, seen in Figure 1A (1). Lateral portions of the spreading surface 44 comprise substantially planar surfaces which intersect at the centreline 45 at an angle of 60° - 140°. As seen in Figure 1A (2), the profile may be a rounded convex surface also highest at the centre line 45', or a combination of angled surfaces and curved intersection areas forming a generally convex shape. A symmetrical shape provides a regular scatter pattern. The profile may be altered to change the scatter pattern. The compound angle of the spreading surface 44 both forwardly and laterally varies the effective deflecting angle depending on where on the profile a seed strikes, thus increasing the spread of the scatter. Deflection angles, as discussed herein, are measured from the centreline 45 in this preferred embodiment.

The shape of the spreading tip 44 assists in creating an even scatter pattern of seed, fertiliser or other dry material. Combining the adjustable broadcast width from the position adjustment with the preferred features of deflection surface 40 results in an even distribution of product over a wide range of furrow sizes. As a result, fertiliser can be applied with the present invention at increased rates without risk of forming high concentration areas which might cause damage to seeds or immature plants. Increasing the distribution of seed and fertiliser over a wider area achieves greater seed bed utilisation than planting in separate rows.

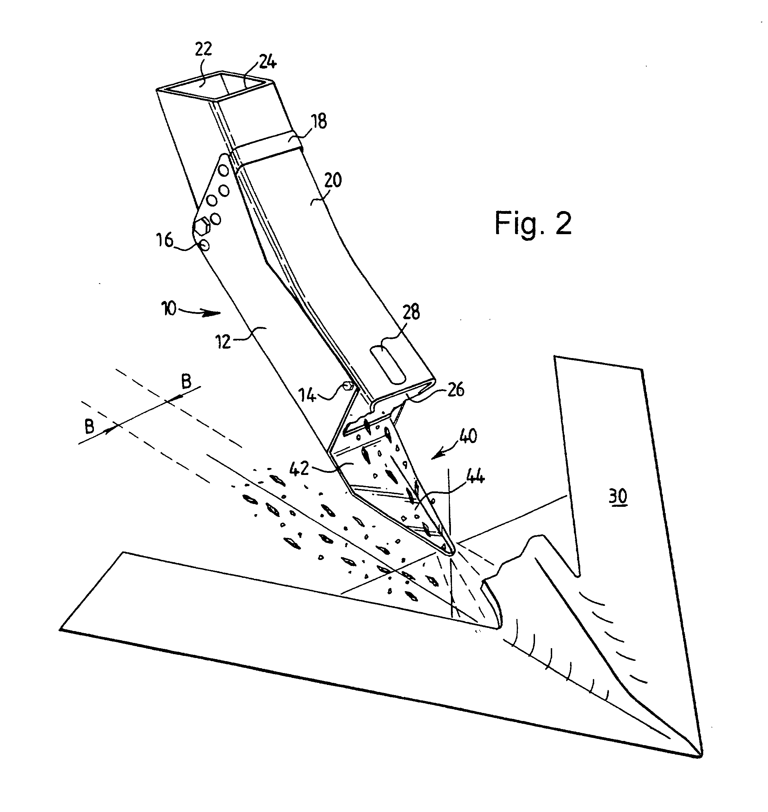

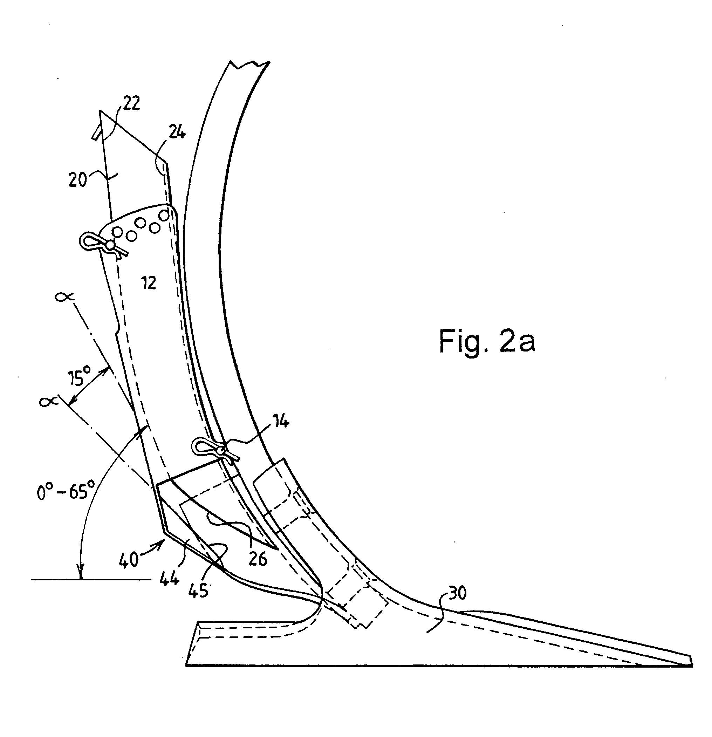

In operation, as illustrated in Figures 2 when the deflecting surface 40 is set at a minimal angle, essentially parallel to the direction of the product stream, the narrowest scatter pattern is achieved, shown at arrows B-B. The discharging stream travels on the rear interior surface 22, passes over the rear portion 42 of the deflecting surface 40 and is deflected by the angled spreading tip portion 44. A fairly even pattern of material is deflected laterally along the edges of the tapered tip 44 assisted by the angled profile. Seed which leaves the spreading portion 44 of the deflecting surface 40 at the widest point is positioned in the furrow furthest from the centreline 45 of the spreader. Seed which leaves the deflecting surface from the narrower portions or from the tip are positioned in the furrow closer to the centreline 45 of the spreader 10.

In a preferred embodiment the minimum angle will remove the spreading portion 44 of the deflecting surface 40 from the product stream completely, so that a no deflection effect may be set without removing the spreaders 10.

The angle of deflecting surface 40 is seen in Figure 2A marked by extending rays α-α. No deflection or 0 angle is at the position parallel to the rear interior surface 22 of the delivery tube at the outlet 26 against which the seed is generally travelling. This angle varies depending on the planting tool used and may be 65°, as illustrated in the present embodiment, or as little as 20°. As the spreader 10 is angled for more deflection the angle of the spreading surface 44 into the product stream becomes higher, up to about 65° which is a substantially horizontal position. For a tool having a lower angle of product stream, the range of deflection angles will also be less, from substantially parallel to the product stream up to a substantially horizontal position. It is not desired to deflect product rearwardly, so a deflection angle will not exceed a substantially horizontal position. Preferably the spreading surface 44 is adjusted between 15° and 30° to the direction of a product stream travelling at 65° to the horizontal.

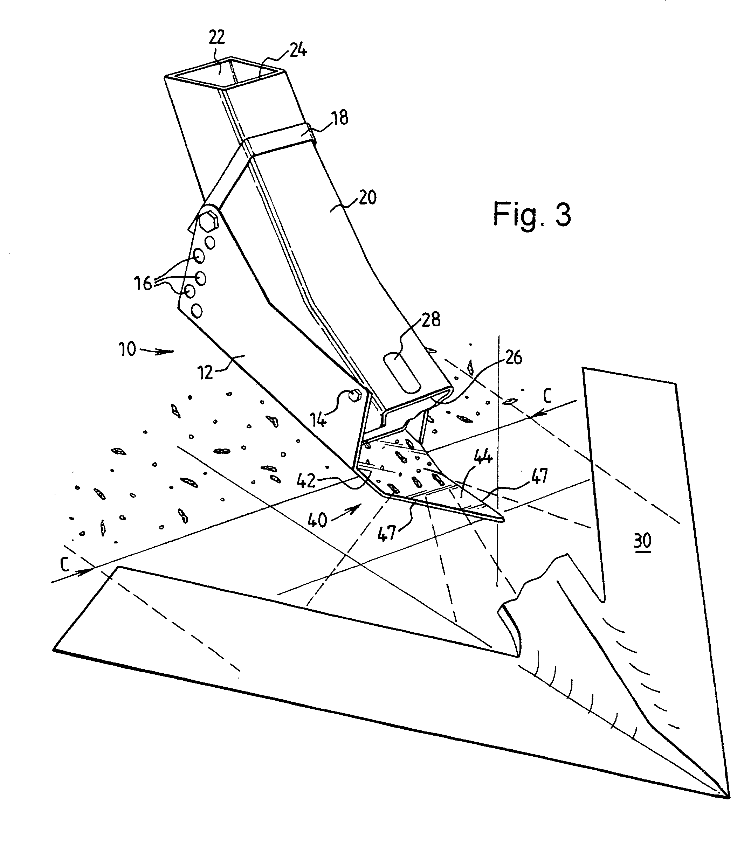

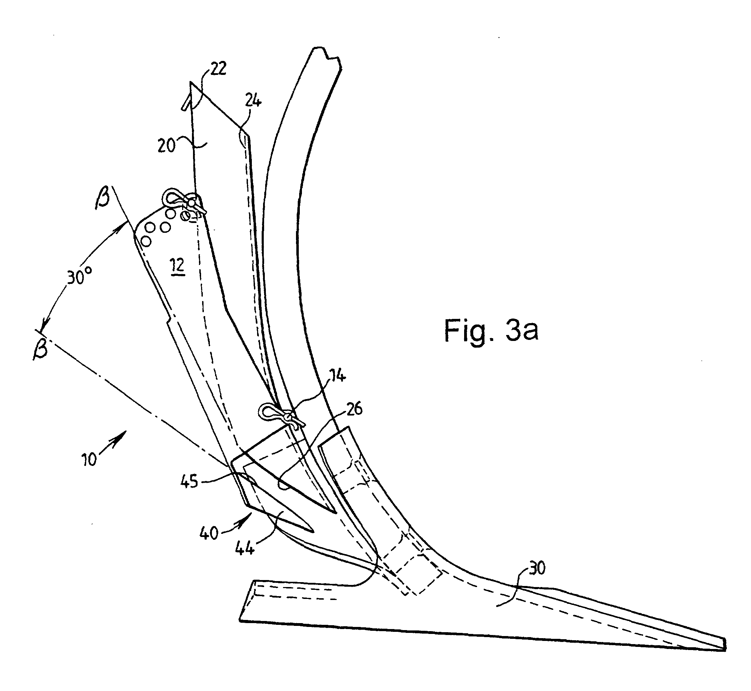

Shown in Figure 3, the spreader 10 is positioned at its maximum angle to the discharging product stream, with the strap 18 bolted to the highest securing point 16. The deflecting surface 40 is positioned at an angle to the product stream, with the spreading tip portion 44 at a higher angle into the product stream causing the product to leave the tip 44 earlier than seen in Figure 2. A resulting wider broadcast pattern is seen between arrows C-C. The location of pivot pins 14 results in the position of the spreading surface 44 being advanced into the product stream in addition to increasing the angle. Due to the tapered shape a broader portion of the spreading surface 44 is placed in the product stream. This effect could also be achieved by a sliding mechanism, without angular adjustment, to advance the position of the spreading surface 44 into the product stream.

The angle of deflecting surface 40 shown in Figure 3A depicts a preferred maximum angle β-β to the product stream of 30° to a product stream at 65°. These angles are selected to achieve maximum spreading as gently as possible to avoid shock and shattering of the seed.

In an alternative embodiment of the present invention, the deflecting surface may be positioned above the product stream still including a forwardly facing leading edge to deflect product forwardly and laterally in a downward direction. An angular position of the deflecting surface to the product stream adjustable from essentially parallel to the product stream to a nearly vertical position will give the desired variation to the width of the spread pattern. Adjustment, likewise, may encompass advancing a tapered deflecting surface farther into the product stream or withdrawing it.

## Claims

1. A spreader associable for mounting on a delivery tube having an outlet (26) through which a stream of product is discharged, said spreader (10) comprising:
a deflecting surface (40);
means (14) for securing the deflecting surface adjacent the outlet (26) of the delivery tube (20); and
adjustment means (16,18) for selectively adjusting the position of the deflecting surface (40) relative to the product stream,
**characterised in that** the deflecting surface is positioned in the product stream free of any lateral product constraining structure.

2. A spreader as claimed in claim 1 or , wherein the deflecting surface (40) has a forwardly facing leading edge.

3. A spreader as claimed in claim 1 or 2, wherein the deflecting surface (40) is positioned below the product stream.

4. A spreader as claimed in any preceding claim, wherein the adjustment means provides angular adjustment within a range from substantially parallel to the product stream to a substantially horizontal position in use.

5. A spreader as claimed in claim 4, wherein the angular adjustment means provides an adjustment between 0° and 65° to the product stream.

6. A spreader as claimed in claim 5, wherein the adjustment means provides an adjustment between substantially 15° and 30° to a product stream at 65° to the horizontal.

7. A spreader as claimed in any preceding claim, wherein the adjustment means comprises pivotal mounting means and cooperating latching means.

8. A spreader as claimed in any preceding claim, wherein the deflecting (40) surface has a tapered shape narrowest at the forwardmost tip of the leading edge (47).

9. A spreader as claimed in claim 8, wherein the deflecting surface (40) is substantially as wide as the delivery tube outlet (26) at its widest point.

10. A spreader as claimed in claim 8 or 9, wherein the leading edge (47) forms an angle at the tip of between 25° and 45°.

11. A spreader as claimed in claim 10, wherein the leading edge (47) forms an angle at the tip of 36°.

12. A spreader as claimed in any preceding claim, wherein the deflecting surface (40) includes a convex profile to the product stream .

13. A spreader as claimed in claim 12, wherein the deflecting surface (40) includes at least one lateral portion angled laterally downward.

14. A spreader as claimed in claim 13, wherein the lateral portions comprise substantially planar surfaces which intersect at an angle of 60° to 140° at a centreline.

15. A spreader as claimed in claim 14, wherein the lateral portions comprise substantially planar surfaces which intersect at an angle of approximately 90° at the centreline.

## Patentansprüche

1. Kombinierbarer Streuvorsatz zum Anbau an ein Ausgaberohr mit einem Auslaß (26), durch welchen ein Produktstrom ausgelassen wird, wobei besagter Streuvorsatz (10) folgendes aufweist:
eine Abweisfläche (40);
Mittel (14) zur Befestigung der Abweisfläche in unmittelbarer Nähe des Auslasses (26) des Ausgaberohres (20); und
Einstellmittel (16, 18) zur selektiven Einstellung der Position der Abweisfläche (40) relativ zum Produktstrom;
**dadurch gekennzeichnet, daß** die Abweisfläche frei von jeder das Produkt seitlich einschränkenden Struktur im Produktstrom positioniert ist.

2. Streuvorsatz nach Anspruch 1, worin die Abweisfläche (40) eine nach vorne weisende Vorderkante aufweist.

3. Streuvorsatz nach Anspruch 1 oder 2, worin die Abweisfläche (40) unterhalb des Produktstromes angeordnet ist.

4. Streuvorsatz nach einem beliebigen der vorangehenden Ansprüche, worin die Einstellmittel eine Winkeleinstellung in einem Bereich ermöglichen, der von einer zum Produktstrom im Betrieb im wesentlichen parallelen Stellung bis zu einer im wesentlichen horizontalen Stellung reicht.

5. Streuvorsatz nach Anspruch 4, worin die Winkeleinstellmittel eine Einstellung in einem Bereich zwischen 0° und 65° zum Produktstrom ermöglichen.

6. Streuvorsatz nach Anspruch 5, worin die Einstellmittel eine Einstellung in einem Bereich zwischen im wesentlichen 15° und 30° zu einem Produktstrom von 65° zur Horizontalen ermöglichen.

7. Streuvorsatz nach einem beliebigen der vorangehenden Ansprüche, worin die Einstellmittel Schwenkbefestigungsmittel und damit zusammenwirkende Verriegelungsmittel beinhalten.

8. Streuvorsatz nach einem beliebigen der vorangehenden Ansprüche, worin die Abweisfläche (40) eine spitz zulaufende Form aufweist, die am schmalsten an der vordersten Spitze der Vorderkante (47) ist.

9. Streuvorsatz nach Anspruch 8, worin die Abweisfläche (40) an ihrem breitesten Punkt im wesentlichen so breit wie der Auslaß (26) des Ausgaberohres ist.

10. Streuvorsatz nach Anspruch 8 oder 9, worin die Vorderkante (47) an der Spitze einen Winkel zwischen 25° und 45° bildet.

11. Streuvorsatz nach Anspruch 10, worin die Vorderkante (47) an der Spitze einen Winkel von 36° bildet.

12. Streuvorsatz nach einem beliebigen der vorangehenden Ansprüche, worin die Abweisfläche (40) ein zum Produktstrom konvexes Profil aufweist.

13. Streuvorsatz nach Anspruch 12, worin die Abweisfläche (40) wenigstens einen Seitenabschnitt aufweist, der seitlich nach unten abgewinkelt ist.

14. Streuvorsatz nach Anspruch 13, worin die seitlichen Abschnitte im wesentlichen ebene Flächen aufweisen, die an einer Mittellinie in einem Winkel von 60° bis 140° zusammentreffen.

15. Streuvorsatz nach Anspruch 14, worin die seitlichen Abschnitte im wesentlichen ebene Flächen aufweisen, die an einer Mittellinie in einem Winkel von ungefähr 90° zusammentreffen.

## Revendications

1. Dispositif de répartition associable en vue du montage sur un tube de distribution comportant une sortie (26) à travers laquelle un flux de produits est débité, ledit dispositif de répartition (10) comprenant :
une surface de déviation (40),
un moyen (14) destiné à fixer la surface de déviation de façon adjacente à la sortie (26) du tube de distribution (20), et
un moyen d'ajustement (16, 18) destiné à ajuster sélectivement la position de la surface de déviation (40) par rapport au flux de produits,
**caractérisé en ce que** la surface de déviation est positionnée dans le flux de produits, exempte de toute structure limitant le produit latéralement.

2. Dispositif de répartition selon la revendication 1, dans lequel la surface de déviation (40) comporte un bord avant dirigé vers l'avant.

3. Dispositif de répartition selon la revendication 1 ou 2, dans lequel la surface de déviation (40) est positionnée en dessous du flux de produits.

4. Dispositif de répartition selon l'une quelconque des revendications précédentes, dans lequel le moyen d'ajustement réalise un ajustement angulaire à l'intérieur d'une plage d'une position pratiquement parallèle au flux de produits à une position pratiquement horizontale, en utilisation.

5. Dispositif de répartition selon la revendication 4, dans lequel le moyen d'ajustement angulaire réalise un ajustement entre 0° et 65° par rapport au flux de produits.

6. Dispositif de répartition selon la revendication 5, dans lequel le moyen d'ajustement réalise un ajustement entre pratiquement 15° et 30° par rapport à un flux de produits à 65° par rapport à l'horizontale.

7. Dispositif de répartition selon l'une quelconque des revendications précédentes, dans lequel le moyen d'ajustement comprend un moyen de montage à pivot et un moyen de blocage coopérant.

8. Dispositif de répartition selon l'une quelconque des revendications précédentes, dans lequel ladite surface de déviation (40) présente une forme effilée plus étroite au niveau du bout le plus vers l'avant du bord avant (47).

9. Dispositif de répartition selon la revendication 8, dans lequel la surface de déviation (40) est sensiblement aussi large que la sortie du tube de distribution (26) au niveau de son point le plus large.

10. Dispositif de répartition selon la revendication 8 ou 9, dans lequel le bord avant (47) forme un angle au niveau du bout entre 25° et 45°.

11. Dispositif de répartition selon la revendication 10, dans lequel le bord avant (47) forme un angle de 36° au niveau du bout.

12. Dispositif de répartition selon l'une quelconque des revendications précédentes, dans lequel la surface de déviation (40) comprend un profil convexe par rapport au flux de produits.

13. Dispositif de répartition selon la revendication 12, dans lequel la surface de déviation (40) comprend au moins une partie latérale angulaire latéralement vers le bas.

14. Dispositif de répartition selon la revendication 13, dans lequel les parties latérales comprennent des surfaces pratiquement planes qui se recoupent à un angle de 60° à 140° au niveau d'une ligne centrale.

15. Dispositif de répartition selon la revendication 14, dans lequel les parties latérales comprennent des surfaces pratiquement planes qui se recoupent à un angle d'approximativement 90° au niveau de la ligne centrale.
